(19) Europäisches Patentamt
European Patent Office
Office européen des brevets

(11) EP 3 570 263 A1

(12) **EUROPEAN PATENT APPLICATION**
published in accordance with Art. 153(4) EPC

(43) Date of publication:
20.11.2019 Bulletin 2019/47

(51) Int Cl.:
*G08G 1/16* (2006.01)

(21) Application number: 18824523.7

(22) Date of filing: 04.06.2018

(86) International application number:
PCT/JP2018/021419

(87) International publication number:
WO 2019/003816 (03.01.2019 Gazette 2019/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.06.2017 JP 2017125430
24.04.2018 JP 2018083078

(71) Applicant: JVCKenwood Corporation
Yokohama-shi, Kanagawa 2210022 (JP)

(72) Inventor: SATO, Morihiro
Yokohama-shi
Kanagawa 2210022 (JP)

(74) Representative: Schmidbauer, Andreas Konrad
Wagner & Geyer Partnerschaft mbB
Patent- und Rechtsanwälte
Gewürzmühlstrasse 5
80538 München (DE)

(54) **DRIVING ASSISTANCE DEVICE, RECORDING DEVICE, DRIVING ASSISTANCE SYSTEM, DRIVING ASSISTANCE METHOD, AND PROGRAM**

(57) A device learns operation of a subject vehicle and appropriately controls an alarm timing. A driving assistance device (10) includes a velocity change acquisition unit (38) that acquires a detection result of a degree of a velocity change of the subject vehicle, a relative velocity acquisition unit (30) that acquires a detection result of a relative velocity of the subject vehicle with respect to a preceding vehicle, an inter-vehicle distance acquisition unit (32) that acquires a detection result of an inter-vehicle distance between the subject vehicle and the preceding vehicle, a determination unit (36) that determines whether the subject vehicle is in a proximity state with respect to the preceding vehicle on the basis of the relative velocity and the inter-vehicle distance, and an alarm control unit (40) that sets an alarm timing that is a timing at which an alarm is output to a driver of the subject vehicle, on the basis of a timing at which it is determined that the proximity state has occurred. The alarm control unit (40) changes the alarm timing on the basis of a detection result of the degree of the velocity change of the subject vehicle that is acquired after determination that the proximity state has occurred.

FIG.2

**Description**

Field

The present invention relates to a driving assistance device, a recording device, a driving assistance system, a driving assistance method, and a program. Background

A device that issues a warning when detecting a risk of a collision with a vehicle ahead or an obstacle by using a camera, a sensor, or the like mounted on a vehicle has been known. If the warning is delayed, it may be difficult to ensure enough time to take actions to avoid the collision, but if the warning is too early, it may cause a driver to feel uncomfortable; therefore, there is a demand for a technique of issuing the warning at an appropriate timing. For example, Patent Literature 1 describes a technique of learning a time taken until a driver performs brake operation after a relative velocity with respect to a vehicle ahead reaches a certain value or larger, and issuing a warning early to a driver who is slow to perform initial brake operation. Furthermore, Patent Literature 2 describes a technique of using an inter-vehicle distance and a relative velocity to determine a degree of approach to a vehicle ahead, and accelerating a warning timing if the degree of approach is high. Moreover, Patent Literature 3 describes a technique of detecting an amount of change of approach to a vehicle ahead, delaying an alarm timing as compared to a normal time if the amount of change of the approach is moderate, and accelerating the alarm timing if the amount of change of the approach is large.

Citation List

Patent Literature

Patent Literature 1: Japanese Laid-open Patent Publication No. 2011-253487 A
Patent Literature 2: Japanese Laid-open Patent Publication No. 2013-222297 A
Patent Literature 3: Japanese Laid-open Patent Publication No. 2012-3710 A

Summary

Technical Problem

However, if the warning timing is controlled only based on the relative velocity and the inter-vehicle distance, in some cases, it may be difficult to issue the warning at an appropriate timing. For example, if the relative velocity is reduced because the driver hits the brakes hard, it may be determined that a degree of risk is low and the alarm timing may be delayed. Further, if the driver hits the brakes hard because the vehicle ahead hits the brakes hard, the relative velocity is maintained substantially constant, so that it may also be determined that the degree of risk is not high and the alarm timing may be delayed. Therefore, there is a demand for a technique of learning operation of the subject vehicle and appropriately controlling the warning timing.

In view of the foregoing situations, an object of the present invention is to provide a driving assistance device, a recording device, a driving assistance system, a driving assistance method, and a program that learns operation of a subject vehicle and appropriately controls an alarm timing.

Solution to Problem

According to an aspect of the present invention, a driving assistance device includes a velocity change acquisition unit configured to acquire a detection result of a degree of a velocity change of a subject vehicle; a relative velocity acquisition unit configured to acquire a detection result of a relative velocity of the subject vehicle with respect to a preceding vehicle; an inter-vehicle distance acquisition unit configured to acquire a detection result of an inter-vehicle distance between the subject vehicle and the preceding vehicle; a determination unit configured to determine whether the subject vehicle is in a proximity state with respect to the preceding vehicle on the basis of the relative velocity and the inter-vehicle distance; and an alarm control unit configured to set an alarm timing that is a timing at which an alarm is output to a driver of the subject vehicle, on the basis of a timing at which it is determined that the proximity state has occurred. The alarm control unit changes the alarm timing on the basis of a detection result of the degree of the velocity change of the subject vehicle that is acquired after determination that the proximity state has occurred.

According to an aspect of the present invention, a driving assistance method includes a velocity change acquisition step of acquiring a detection result of a degree of a velocity change of a subject vehicle; a relative velocity acquisition step of acquiring a detection result of a relative velocity of the subject vehicle with respect to a preceding vehicle; an inter-vehicle distance acquisition step of acquiring a detection result of an inter-vehicle distance between the subject vehicle and the preceding vehicle; a determination step of determining whether the subject vehicle is in a proximity state with respect to the preceding vehicle on the basis of the relative velocity and the inter-vehicle distance; and an alarm control step of setting an alarm timing that is a timing at which an alarm is output to a driver of the subject vehicle, on the basis of a timing at which it is determined that the proximity state has occurred. At the alarm control step, the alarm timing is changed on the basis of a value of the velocity change of the subject vehicle that is acquired after determination that the proximity state has occurred.

According to an aspect of the present invention, a program causes a computer to execute a velocity change acquisition step of acquiring a detection result of a degree of a velocity change of a subject vehicle; a relative velocity acquisition step of acquiring a detection result of a relative velocity of the subject vehicle with respect to a preceding vehicle; an inter-vehicle distance acquisition step of acquiring a detection result of an inter-vehicle distance between the subject vehicle and the preceding vehicle; a determination step of determining whether the subject vehicle is in a proximity state with respect to the preceding vehicle on the basis of the relative velocity and the inter-vehicle distance; and an alarm control step of setting an alarm timing that is a timing at which an alarm is output to a driver of the subject vehicle, on the basis of a timing at which it is determined that the proximity state has occurred. At the alarm control step, the alarm timing is changed on the basis of a value of the velocity change of the subject vehicle that is acquired after determination that the proximity state has occurred.

Advantageous Effects of Invention

According to the present invention, it is possible to learn operation of a subject vehicle and appropriately control an alarm timing.

Brief Description of Drawings

FIG. 1 is a schematic diagram for explaining a subject vehicle and a preceding vehicle.
FIG. 2 is a schematic block diagram of a driving assistance system according to a first embodiment.
FIG. 3 is a flowchart for explaining the flow of output of an alarm by the driving assistance system according to the first embodiment.
FIG. 4 is a flowchart for explaining a process of calculating an alarm timing correction value by the driving assistance system according to the first embodiment.
FIG. 5 is a schematic block diagram of a driving assistance system according to a second embodiment.
FIG. 6 is a schematic block diagram of an alarm control unit according to a third embodiment.

Description of Embodiments

Hereinafter, embodiments of the present invention will be described in detail based on the drawings. The present invention is not limited by the embodiments described below.

First Embodiment

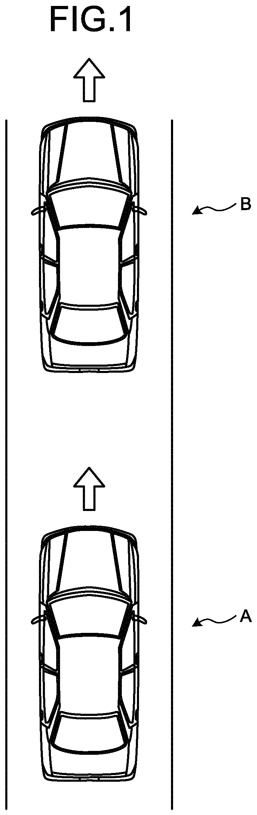

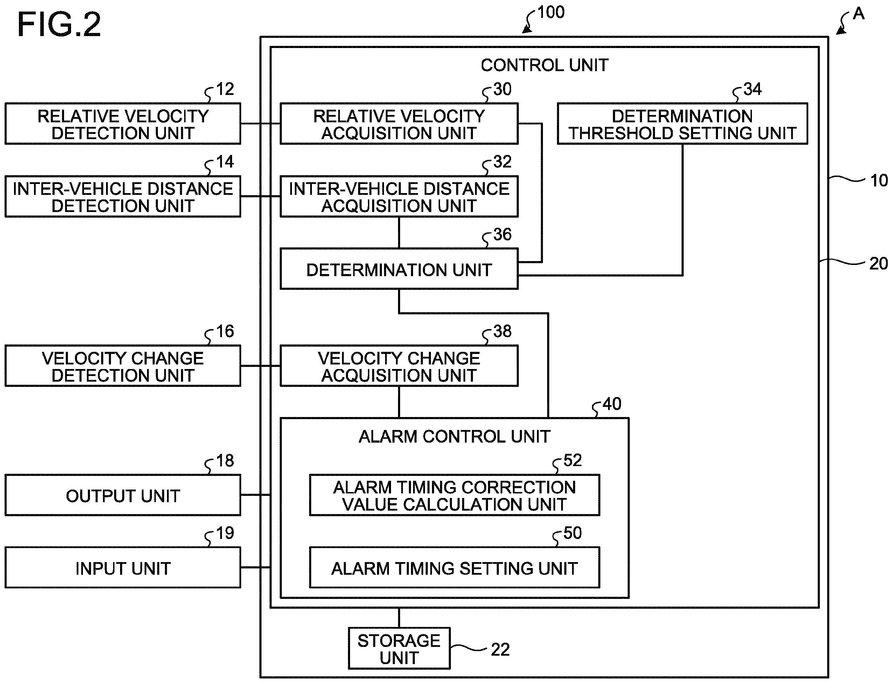

FIG. 1 is a schematic diagram for explaining a subject vehicle and a preceding vehicle. FIG. 2 is a schematic block diagram of a driving assistance system according to a first embodiment. A driving assistance system 100 according to the first embodiment is mounted on a subject vehicle A illustrated in FIG. 1. The driving assistance system 100 is a system that outputs an alarm to a driver of the subject vehicle A by being triggered by occurrence of a proximity state of the subject vehicle A with respect to a preceding vehicle B that is located ahead in a traveling direction as illustrated in FIG. 1. The proximity state indicates a state in which there is a certain possibility that a collision of the subject vehicle A with the preceding vehicle B may occur, and is determined based on an inter-vehicle distance or a relative velocity between the subject vehicle A and the preceding vehicle B or a subject vehicle velocity. The driving assistance system 100 may be a portable device that can be used in the subject vehicle A, in addition to one mounted on the subject vehicle A. The driving assistance system 100 may be, for example, an on-vehicle storage device, such as a drive recorder, or an imaging device including a camera as a detection unit (sensor group) which will be described later.

As illustrated in FIG. 2, the driving assistance system 100 includes a driving assistance device 10, a relative velocity detection unit 12, an inter-vehicle distance detection unit 14, a velocity change detection unit 16, an output unit 18, and an input unit 19. The driving assistance device 10 is a device for setting an alarm timing, and, details thereof will be described later. The alarm timing is a timing at which an alarm is output to a driver of the subject vehicle A.

The relative velocity detection unit 12 is a sensor that detects a relative velocity of the subject vehicle A with respect to the preceding vehicle B, or a unit that includes the sensor and an arithmetic unit for deriving the relative velocity from a sensor output. The inter-vehicle distance detection unit 14 is a sensor that detects a distance between the subject vehicle A and the preceding vehicle B, i.e., an inter-vehicle distance, or a unit that includes the sensor and an arithmetic unit for deriving the inter-vehicle distance from a sensor output. The relative velocity detection unit 12 and the inter-vehicle distance detection unit 14 may include, for example, a front right sensor, a front center sensor, a front left sensor, a rear right sensor, a rear center sensor, and a rear left sensor. The front right sensor, the front center sensor, and the front left sensor detect a vehicle ahead of the subject vehicle A, i.e., the preceding vehicle B, and detect the relative velocity and the inter-vehicle distance. The rear right sensor, the rear center sensor, and the rear left sensor detect a vehicle located on the rear side of the subject vehicle A.

The velocity change detection unit 16 is a sensor that detects a velocity change of the subject vehicle A, or a unit that includes the sensor and an arithmetic unit for deriving a velocity change of the subject vehicle from a sensor output. The velocity change of the subject vehicle A is an amount of change of an absolute velocity of the subject vehicle A per unit time, i.e., acceleration. The velocity change detection unit 16 may include, for example, a velocity sensor and calculate a value of the velocity change of the subject vehicle A by performing temporal differentiation of a velocity of the subject vehicle A detected by the velocity sensor. Further, the velocity change detection unit 16 may include, for example, an acceleration sensor and detect acceleration of the subject vehicle A detected by the acceleration sensor as the value of the velocity change of the subject vehicle A. The velocity change of the subject vehicle A is a change of the absolute velocity of the subject vehicle A, and therefore is a value that can be detected from only an operating condition of the subject vehicle A independently of an operating condition of the preceding vehicle B unlike the relative velocity that is further based on a velocity of the preceding vehicle B.

The relative velocity detection unit 12, the inter-vehicle distance detection unit 14, and the velocity change detection unit 16 are mounted as a detection unit that detects the relative velocity, the inter-vehicle distance, and a degree of the velocity change of the subject vehicle A, i.e., a sensor group including a plurality of sensors, on the subject vehicle A.

The output unit 18 outputs information to the driver of the subject vehicle A. In the first embodiment, the output unit 18 includes, for example, a display unit and a speaker. The display unit is a display including a liquid crystal display (LCD), an organic electroluminescence (EL) display, and a head-up display. The display unit displays a video based on a video signal output from the driving assistance device 10. The display unit may be dedicated to the driving assistance system 100, or may be shared with other systems including, for example, a navigation system. The display unit is arranged at a position that can easily be viewed by the driver. Further, the speaker is, for example, a voice output device shared with other systems including the navigation system. The speaker outputs voice based on a voice signal output from the driving assistance device 10.

The output unit 18 outputs an alarm to the driver of the subject vehicle A at the alarm timing set by the driving assistance device 10. Namely, the output unit 18 has a function as an alarm output unit that outputs an alarm. The output unit 18 may cause the display unit to display, as the alarm, a warning video indicating that there is a risk of a collision with the preceding vehicle B, cause the speaker to output warning voice, or cause both of them to be performed.

The input unit 19 is a device used by the driver of the subject vehicle A to perform operation (input of information), and is, for example, a touch panel or a button.

Next, the driving assistance device 10 will be described. As illustrated in FIG. 2, the driving assistance device 10 includes a control unit 20 and a storage unit 22. The control unit 20 is an arithmetic processing device including a central processing unit (CPU), a processor for video processing, or the like. The storage unit 22 stores therein data needed for various processes performed by the driving assistance device 10 and various processing results. The storage unit 22 is a storage device, such as a semiconductor memory including a random access memory (RAM), a read only memory (ROM), and a flash memory, a hard disk, or an optical disk. Alternatively, the storage unit may be an external storage device that is wirelessly connected via a communication device (not illustrated).

The control unit 20 loads a program stored in the storage unit 22 onto a memory, and executes a command included in the program. The control unit 20 includes an internal memory (not illustrated), and the internal memory is used for, for example, temporarily storing data in the control unit 20. The control unit 20 may be constituted by one or a plurality of devices.

The control unit 20 determines whether the subject vehicle A is in the proximity state on the basis of the relative velocity and the inter-vehicle distance. The control unit 20 causes the output unit 18 to output the alarm at the set alarm timing on the basis of a determination result indicating that the proximity state has occurred. Further, the control unit 20 learns operation of the subject vehicle A and updates the alarm timing. The control unit 20 includes a relative velocity acquisition unit 30, an inter-vehicle distance acquisition unit 32, a determination threshold setting unit 34, a determination unit 36, a velocity change acquisition unit 38, and an alarm control unit 40.

The relative velocity acquisition unit 30 acquires, from the relative velocity detection unit 12, a detection result of the relative velocity of the subject vehicle A with respect to the preceding vehicle B. Alternatively, the relative velocity acquisition unit 30 may acquire the relative velocity from a relative velocity arithmetic unit (not illustrated) that acquires vehicle information including the velocity from a controller area network (CAN) and calculates the relative velocity. The relative velocity acquisition unit 30 acquires a latest value of the detection result of the relative velocity at predetermined time intervals. The inter-vehicle distance acquisition unit 32 acquires, from the inter-vehicle distance detection unit 14, a detection result of the inter-vehicle distance between the subject vehicle A and the preceding vehicle B. The inter-vehicle distance acquisition unit 32 acquires a latest value of the detection result of the inter-vehicle distance at predetermined time intervals.

The determination threshold setting unit 34 acquires a determination threshold for determining the proximity state from the storage unit 22. The determination threshold is a set value that is determined in advance, and the value is not changed in the first embodiment. However, as will be described later, the alarm control unit 40 may change (update) the determination threshold.

The determination unit 36 acquires a current value (latest value) of the detection result of the relative velocity from the relative velocity acquisition unit 30 and acquires a current value (latest value) of the detection result of the inter-vehicle distance from the inter-vehicle distance acquisition unit 32. The determination unit 36 calculates a collision expected time on the basis of the relative velocity and the inter-vehicle distance. The collision expected time is a time until a collision of the subject vehicle A with the preceding vehicle B occurs if the relative velocity is continued as it is. For example, when the inter-vehicle distance is 12 meters (m) and the relative velocity of the subject vehicle A with respect to the preceding vehicle B (the relative velocity in a direction in which the subject vehicle A approaches the preceding vehicle B) is 4 m/s, the determination unit 36 determines that the collision expected time is 3 seconds.

The determination unit 36 further acquires the determination threshold from the determination threshold setting unit 34. The determination threshold is set to, for example, a certain value indicating that there is a risk that a collision of the subject vehicle A with the preceding vehicle B may occur when a value of the collision expected time is equal to or smaller than the determination threshold. For example, the determination threshold is set to 3 seconds, but is not limited thereto and may be set to an arbitrary value.

The determination unit 36 determines whether the subject vehicle A is in the proximity state with respect to the preceding vehicle B on the basis of the relative velocity, the inter-vehicle distance, and the determination threshold. The proximity state indicates a state in which there is a risk that a collision of the subject vehicle A with the preceding vehicle B may occur after a lapse of a predetermined time if the relative velocity is continued as it is. Alternatively, the determination unit 36 may determine whether the proximity state has occurred on the basis of the inter-vehicle distance between the subject vehicle A and the preceding vehicle B and the subject vehicle velocity. The determination threshold is used for determination of the predetermined time. Specifically, the determination unit 36 determines that the subject vehicle A is in the proximity state if the calculated collision expected time is equal to or smaller than the determination threshold, and determines that the subject vehicle A is not in the proximity state if the calculated collision expected time is higher than the determination threshold. In the example as described above, the collision expected time is 3 seconds and the determination threshold is also 3 seconds, so that the determination unit 36 determines that the current subject vehicle A is in the proximity state.

The velocity change acquisition unit 38 acquires, from the velocity change detection unit 16, a detection result of the degree of the velocity change of the subject vehicle A. Alternatively, the velocity change acquisition unit 38 may acquire the degree of the velocity change from a velocity change arithmetic unit (not illustrated) that acquires vehicle information including the velocity from a controller area network (CAN) and calculates the velocity change. The degree of the velocity change of the subject vehicle A is a value based on the velocity change (acceleration) of the subject vehicle A detected by the velocity change detection unit 16, and is an index indicating a magnitude of the velocity change of the subject vehicle A. In the first embodiment, the degree of the velocity change of the subject vehicle A is completely the same as the value of the velocity change of the subject vehicle A. Namely, the velocity change acquisition unit 38 acquires the value of the velocity change of the subject vehicle A from the velocity change detection unit 16. However, as will be described later, the velocity change acquisition unit 38 may acquire detection results of other parameters (brake pedal pressure and the like) in addition to the value of the velocity change of the subject vehicle A, and acquire (calculate) the degree of the velocity change of the subject vehicle A on the basis of the detection results. The degree of the velocity change of the subject vehicle A is a value that can be acquired from only the operating condition of the subject vehicle A independently of the operating condition of the preceding vehicle B.

More specifically, the velocity change acquisition unit 38 acquires the detection result of the velocity change of the subject vehicle A by being triggered when the determination unit 36 determines that the proximity state has occurred. Namely, the velocity change acquisition unit 38 acquires the degree of the velocity change of the subject vehicle A since a proximity timing. The proximity timing is a timing at which the determination unit 36 determines that the proximity state has occurred. Further, hereinafter, the degree of the velocity change of the subject vehicle A since the proximity timing will be referred to as a proximity velocity change value. Specifically, the velocity change acquisition unit 38 acquires, as the proximity velocity change value, the degree of the velocity change of the subject vehicle A in a period from the proximity timing until a lapse of a predetermined time. The predetermined time in this case is a time, such as several seconds, in which the subject vehicle A can stop at least by hard braking, and is set to, for example, a value equal to or smaller than the determination threshold. In general, when the subject vehicle A approaches the preceding vehicle B to such an extent that it can be determined that the proximity state has occurred, the driver decelerates the subject vehicle A to avoid a collision. Therefore, the velocity change acquisition unit 38 acquires, as the proximity velocity change value, a degree of deceleration (acceleration in a deceleration direction) of the subject vehicle A in the period from the proximity timing until a lapse of the predetermined time. The velocity change detection unit 16 samples the velocity change of the subject vehicle A regardless of whether it is determined that the proximity state has occurred, but may start detection of the velocity change from the proximity timing by being triggered by the determination that the proximity state has occurred.

The proximity velocity change value acquired by the velocity change acquisition unit 38 is used by the alarm control unit 40 to set an alarm output timing in the following proximity states.

The alarm control unit 40 sets the alarm timing on the basis of the proximity timing (a timing at which it is determined that the proximity state has occurred). Further, the alarm control unit 40 changes the alarm timing on the basis of the proximity velocity change value (the degree of the velocity change of the subject vehicle A since the proximity timing). The alarm timing is a timing at which the alarm is output to the driver of the subject vehicle A. The alarm control unit 40 includes an alarm timing setting unit 50 and an alarm timing correction value calculation unit 52.

The alarm timing setting unit 50 acquires, as the proximity timing, a timing at which the determination unit 36 determines that the proximity state has occurred. Then, the alarm timing setting unit 50 reads, from the storage unit 22, an alarm timing correction value that is stored in the storage unit 22. The alarm timing setting unit 50 sets the alarm timing on the basis of the proximity timing and the alarm timing correction value. Here, the proximity timing is denoted by t0, the alarm timing correction value is denoted by $\Delta t$, and the alarm timing is denoted by t1. The alarm timing setting unit 50 calculates the alarm timing t1 by Equation (1) below.

$$t1 = t0 + \Delta t \hspace{5cm} (1)$$

Namely, the alarm timing setting unit 50 sets, as the alarm timing t1, a value that is obtained by adding the alarm timing correction value $\Delta t$ to the proximity timing t0. In other words, the alarm timing setting unit 50 sets, as the alarm timing t1, a timing that is delayed by the alarm timing correction value $\Delta t$ from the proximity timing t0. As will be described later, the alarm timing correction value $\Delta t$ is a value that is calculated by the alarm timing correction value calculation unit 52 and calculated as a value equal to or larger than zero (a value equal to or larger than 0 seconds).

The alarm timing correction value calculation unit 52 calculates the alarm timing correction value $\Delta t$. As indicated by Equation (1) above, the alarm timing correction value $\Delta t$ is a correction value for shifting (correcting), from the alarm timing t0, the alarm timing t1 for the next times. The alarm timing correction value calculation unit 52 calculates the alarm timing correction value $\Delta t$ on the basis of the proximity velocity change value (the degree of the velocity change of the subject vehicle A since the proximity timing) acquired by the velocity change acquisition unit 38. The alarm timing correction value calculation unit 52 updates and calculates the alarm timing correction value $\Delta t$ every time the proximity velocity change value is acquired, i.e., every time the proximity state occurs. In other words, the alarm timing correction value calculation unit 52 performs learning based on the proximity velocity change value, updates and calculates the alarm timing correction value $\Delta t$, and corrects the alarm timing t1.

Specifically, the alarm timing correction value calculation unit 52 acquires, from the velocity change acquisition unit 38, the proximity velocity change value since a current proximity timing. Further, the alarm timing correction value calculation unit 52 acquires, from the storage unit 22, a change threshold and the alarm timing correction value $\Delta t$ that has been calculated based on preceding learning. The change threshold is a value that is set in advance to update the value of the alarm timing correction value $\Delta t$. The change threshold may be a certain value or a value range determined in advance. The alarm timing correction value calculation unit 52 changes the calculated alarm timing correction value $\Delta t$ on the basis of a magnitude relationship between the proximity velocity change value and the change threshold, and calculates the changed alarm timing correction value $\Delta t$ as an updated alarm timing correction value $\Delta t'$. The alarm timing correction value calculation unit 52 stores the updated timing correction value $\Delta t'$, as the alarm timing correction value $\Delta t$ that has been updated, in the storage unit 22.

More specifically, if the proximity velocity change value is equal to or larger than the change threshold, the alarm timing correction value calculation unit 52 decreases the value of the calculated alarm timing correction value $\Delta t$ and calculates the decreased value as the updated timing correction value $\Delta t'$. The alarm timing correction value calculation unit 52 accelerates the alarm timing t1 for the next times by reducing the value of the alarm timing correction value $\Delta t$. In other words, the alarm timing correction value calculation unit 52 sets the alarm timing t1 for the next times to a timing closer to the proximity timing t0. Further, if the proximity velocity change value is smaller than the change threshold, the alarm timing correction value calculation unit 52 increases the value of the calculated alarm timing correction value Δt and calculates the increased value as the updated timing correction value Δt'. The alarm timing correction value calculation unit 52 delays the alarm timing t1 for the next times by increasing the value of the alarm timing correction value Δt. In other words, the alarm timing correction value calculation unit 52 sets the alarm timing t1 for the next times to a timing later than the proximity timing t0. The alarm timing correction value calculation unit 52 sets a lower limit of the updated timing correction value Δt' (the alarm timing correction value Δt) to zero to prevent the alarm timing correction value Δt from being set to a value smaller than zero. With this configuration, the alarm timing t1 is prevented from becoming earlier than the proximity timing t0. Further, the alarm timing correction value calculation unit 52 sets an upper limit of the updated timing correction value Δt' (the alarm timing correction value Δt) to prevent the alarm timing correction value Δt from being set to a value larger than the upper limit. With this configuration, a delay time of the alarm timing t1 from the proximity timing t0 is limited so that the alarm timing t1 is prevented from being too delayed.

The alarm timing correction value calculation unit 52 calculates an amount of change of the alarm timing correction value Δt on the basis of a difference between the proximity velocity change value and the change threshold. Specifically, the alarm timing correction value calculation unit 52 increases the amount of change of the calculated alarm timing correction value Δt with an increase in the difference between the proximity velocity change value and the change threshold, and decreases the amount of change of the calculated alarm timing correction value Δt with a decrease in the difference between the proximity velocity change value and the change threshold. Further, the alarm timing correction value calculation unit 52 may divide a difference between the current proximity velocity change value and the change threshold by the number of past detections of the proximity velocity change value, and calculate the amount of change of the alarm timing correction value Δt based on a value obtained by the division.

As described above, the alarm timing correction value calculation unit 52 updates the alarm timing correction value Δt on the basis of the proximity velocity change value (the degree of the velocity change of the subject vehicle A since the proximity timing). The alarm timing setting unit 50 sets the alarm timing t1 for a next proximity timing, by using the alarm timing correction value Δt that is updated at the current proximity timing. Namely, when setting the alarm timing t1 for the next times, the alarm timing setting unit 50 uses the alarm timing correction value Δt updated by the alarm timing correction value calculation unit 52. The alarm timing setting unit 50 sets the alarm timing t1 for the current proximity timing by using the alarm timing correction value Δt that has been calculated at a preceding proximity timing.

In this manner, the alarm control unit 40 changes the alarm timing t1 for the next times by using the alarm timing correction value Δt that is calculated based on the proximity velocity change value. In other words, the alarm control unit 40 changes the current alarm timing t1 on the basis of the current proximity timing t0 and the alarm timing correction value Δt that has been calculated at a preceding proximity timing. Further, if the proximity velocity change value (the degree of the velocity change of the subject vehicle A since the proximity timing) is equal to or larger than the change threshold, the alarm control unit 40 updates and decreases the alarm timing correction value Δt, to thereby accelerate the alarm timing t1 for the next times. Furthermore, if the proximity velocity change value is smaller than the change threshold, the alarm control unit 40 updates and increases the alarm timing correction value Δt, to thereby delay the alarm timing t1 for the next times. A time at which the alarm timing t1 is changed is not limited to the next time. It may be possible to implement an embodiment in which an average value in several proximity states is obtained to calculate the correction value of the alarm timing (the alarm timing correction value Δt).

The alarm control unit 40 causes the output unit 18 to output the alarm at the alarm timing t1 that is set as described above. Accordingly, the output unit 18 outputs the alarm at the alarm timing t1.

The alarm control unit 40 may update the determination threshold used for determination of the proximity state, on the basis of the proximity velocity change value (the degree of the velocity change of the subject vehicle A since the proximity timing). The determination unit 36 performs determination on occurrence of the proximity state for the next times, on the basis of the updated determination threshold. In this case, the alarm control unit 40 increases the determination threshold if the proximity velocity change value is equal to or larger than a predetermined threshold, and decreases the determination threshold if the proximity velocity change value is smaller than the predetermined threshold. Occurrence of the proximity state is more frequently determined with an increase in the determination threshold, and occurrence of the proximity state is less frequently determined with a decrease in the determination threshold.

Further, the alarm control unit 40 may set the alarm timing t1 such that the alarm timing can be changed for each of drivers. In other words, the driving assistance device 10 may include a driver information acquisition unit (not illustrated), cause the driver information acquisition unit to identify a driver, and store the alarm timing correction value Δt for each of drivers in the storage unit 22. In this case, when, for example, the driver in the subject vehicle A inputs his/her information (an ID or the like) to the input unit 19, the driver information acquisition unit acquires the information on the driver and identifies the driver. The alarm control unit 40 reads, from the storage unit 22, the alarm timing correction value Δt that is stored in association with the driver identified by the driver information acquisition unit. The driver information acquisition unit may identify the driver by using a known technique, such as person authentication using a camera or ID identification by communication with a smartphone carried by the driver. In this manner, the alarm control unit 40 may include the driver information acquisition unit for identifying the driver of the subject vehicle A and set the alarm timing for each of identified drivers. With this configuration, the driving assistance device 10 is able to learn and set the alarm timing t1 for each of drivers, so that even when, for example, the driver of the subject vehicle A is changed, it is possible to appropriately set the alarm timing.

As described above, the alarm control unit 40 may include the driver information acquisition unit for identifying the driver and set the alarm timing t1 for each of identified drivers. In other words, the driving assistance device 10 may include a learning function for each of drivers and change the alarm timing t1 in accordance with operating characteristics of the drivers. It may be possible to identify the driver by manually selecting the driver from a driver list that is registered in advance, by using known means, such as face authentication, fingerprint authentication, or wireless ID authentication of smartphones, or by using license number authentication or personal identification number authentication. Further, if the driver information acquisition unit detects that the driver has not driven the subject vehicle A for a predetermined period or longer, the alarm control unit 40 may reset the alarm timing t1 for the driver to an initial set value. The initial set value is the alarm timing t1 that is set before the alarm timing t1 is changed based on the detection result of the degree of the velocity change of the subject vehicle A. In the present embodiment, the initial set value of the alarm timing t1 is the proximity timing t0 because the alarm timing correction value $\Delta t$ is absent. Furthermore, the predetermined period is a period set in advance, such as several weeks, and is a period after which a driver feels that he/she drives for the first time in ages. The predetermined period can be set to an arbitrary value because a driver who drives every day may feel that he/she drives for the first time in ages when he/she has not driven for several days.

As described above, the driving assistance device 10 may set the warning timing t1 learned for each of drivers to default setting (initial set value) for a driver who has not driven for the predetermined period. As for a danger warning for a front collision or the like, it is preferable to, for safety purposes, issue the warning at an earlier timing to a driver who is not used to drive a vehicle, and if the earlier warning becomes disturbing to the user who has gotten used to drive the vehicle, it is preferable to appropriately reduce the frequency of the warning by delaying the timing to issue the warning. Therefore, the driving assistance device 10 is able to improve the safety by setting the warning timing to the initial setting for a user who has not driven for a certain period, regardless of past learning results. Furthermore, for a user who is not used to drive a vehicle and for whom the warning timing becomes earlier than the initial set value, it is preferable to adopt an earlier warning timing between the initial set value and the learning result.

The alarm timing t1 reflects a value that is changed based on the detection result of the degree of the velocity change of the subject vehicle A even at the time of driving on the following days. However, the alarm control unit 40 may reset changes of the alarm timing made on the preceding days, and reset the the alarm timing t1 at the start of driving the subject vehicle A on a current day to the initial set value. In other words, the driving assistance device 10 may reset, at the start of driving on each day, the warning timing t1 that has been learned on the preceding days, and start the warning timing t1 from the initial set value. In this case, a proximity warning with respect to the preceding vehicle B is frequently issued immediately after the start of the driving, but the frequency of issuance of the warning is reduced by learning while safe driving is continued. In the embodiment as described above, whether a user is driving safely is evaluated objectively, and the user can realize that he/she drives safely and try to keep driving safely on a daily basis.

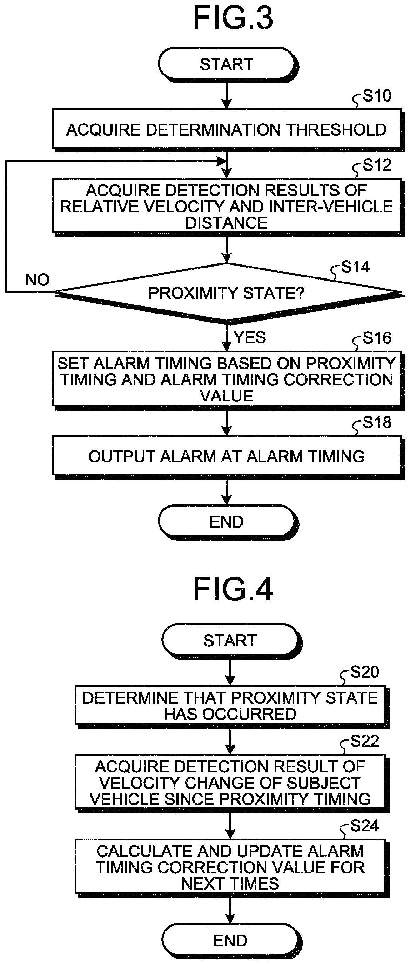

The driving assistance device 10 is configured as described above. The flow of output of the alarm by the driving assistance system 100 will be described below. FIG. 3 is a flowchart for explaining the flow of output of the alarm by the driving assistance system according to the first embodiment. As illustrated in FIG. 3, in outputting the alarm by the driving assistance system, the determination unit 36 acquires the determination threshold from the determination threshold setting unit 34 (Step S10), acquires the detection result of the relative velocity of the subject vehicle A with respect to the preceding vehicle B from the relative velocity acquisition unit 30, and acquires the detection result of the inter-vehicle distance between the subject vehicle A and the preceding vehicle B from the inter-vehicle distance acquisition unit 32 (Step S12). Subsequently, the determination unit 36 determines whether the subject vehicle A is in the proximity state on the basis of the relative velocity, the inter-vehicle distance, and the determination threshold (Step S14). If the determination unit 36 determines that the proximity state has occurred (Step S14; No), the determination unit 36 returns to Step S12, and continues to acquire the latest values of the relative velocity and the inter-vehicle distance and determine whether the proximity state has occurred. If the determination unit 36 determines that the proximity state has occurred (Step S14; Yes), the alarm control unit 40 of the driving assistance system 100 sets the alarm timing t1 based on the proximity timing t0 and the alarm timing correction value $\Delta t$ (Step S16). The alarm control unit 40 causes the alarm timing setting unit 50 to set the alarm timing t1 on the basis of the proximity timing t0 at which it is determined that the proximity state has occurred and the alarm timing correction value $\Delta t$ that is calculated at a preceding proximity timing. The alarm control unit 40 causes the output unit 18 to output the alarm at the alarm timing t1 (Step S18). Thereafter, the driving assistance system 100 continues the process of determining occurrence of the proximity state and setting the alarm timing t1, and terminates the process in accordance with a process termination instruction.

Next, the flow of calculating (updating) the alarm timing correction value $\Delta t$ will be described. FIG. 4 is a flowchart for explaining a process of calculating the alarm timing correction value by the driving assistance system according to the first embodiment. As illustrated in FIG. 4, if the determination unit 36 determines that the proximity state has occurred (Step S20), the driving assistance system 100 causes the alarm timing correction value calculation unit 52 to acquire, from the velocity change acquisition unit 38, the detection result of the velocity change of the subject vehicle A since the proximity timing (proximity velocity change value) (Step S22). Upon acquiring the proximity velocity change value, the alarm timing correction value calculation unit 52 calculates and updates the alarm timing correction value $\Delta t$ for the next times, on the basis of the proximity velocity change value (Step S24). Specifically, the alarm timing correction value calculation unit 52 updates the alarm timing correction value $\Delta t$ on the basis of the proximity velocity change value since the current proximity timing, the alarm timing correction value $\Delta t$ that has been calculated by preceding learning, and the change threshold. The updated alarm timing correction value $\Delta t$ is used for calculation of the alarm timing at the following proximity timing at Step S16 in FIG. 3. The alarm timing correction value calculation unit 52 continues to update the alarm timing correction value $\Delta t$ and terminates the process in accordance with a process termination instruction.

Here, if the alarm timing t1 is not corrected using the alarm timing correction value $\Delta t$, a timing to output the alarm is determined in accordance with only the proximity timing t0. The proximity timing t0 is a timing that is calculated based on the relative velocity and the inter-vehicle distance and is determined as a timing at which there is a risk that a collision of the subject vehicle A with the preceding vehicle B may occur. Therefore, if the alarm is output in accordance with the proximity timing t0, it is possible to alert the driver and prompt prevention of a collision. However, whether the timing to output the alarm is appropriate may depend on drivers. For example, some drivers may feel that the alarm at the set timing is so early that they may be disturbed while driving, or, in contrast, some drives may feel that the alarm at the set timing is so late that they may be late to take actions and may hit the brakes hard. Furthermore, the proximity timing t0 depends on not only the operating condition of the subject vehicle A, but also the operating condition of the preceding vehicle B, so that, in some cases, the timing of the alarm based on only the proximity timing t0 may be inappropriate. For example, if the relative velocity is reduced because the drive hits the brakes hard, the timing to output the alarm may be delayed. Furthermore, if the preceding vehicle B decelerates due to hard braking and therefore the driver hits the brakes hard to decelerate the subject vehicle A, the relative velocity is substantially maintained constant, so that the timing to output the alarm may be delayed. As described above, to appropriately set the timing to output the alarm, data based on the relative velocity and the inter-vehicle distance (the proximity timing t0) may be insufficient in some cases. In contrast, the driving assistance device 10 according to the first embodiment learns the appropriate alarm timing t1 (calculates the alarm timing correction value $\Delta t$) on the basis of the degree of the velocity change of the subject vehicle A since the proximity timing t0, and changes the alarm timing t1 for the next times. The driving assistance device 10 learns and corrects the alarm timing t1 on the basis of the velocity change of the subject vehicle A, i.e., the operating condition, so that it is possible to output the alarm at a timing corresponding to the characteristics of the driver or the characteristics of the subject vehicle A.

Specifically, the driving assistance device 10 according to the first embodiment includes the relative velocity acquisition unit 30, the inter-vehicle distance acquisition unit 32, the determination unit 36, the velocity change acquisition unit 38, and the alarm control unit 40. The relative velocity acquisition unit 30 acquires the detection result of the relative velocity of the subject vehicle A with respect to the preceding vehicle B. The inter-vehicle distance acquisition unit 32 acquires the detection result of the inter-vehicle distance between the subject vehicle A and the preceding vehicle B. The determination unit 36 determines whether the subject vehicle A is in the proximity state with respect to the preceding vehicle B on the basis of the relative velocity and the inter-vehicle distance. The velocity change acquisition unit 38 acquires the detection result of the degree of the velocity change of the subject vehicle A. The alarm control unit 40 sets the alarm timing t1 that is a timing at which the alarm is output to the driver of the subject vehicle A, on the basis of the timing (the proximity timing t0) at which it is determined that the proximity state has occurred. Then, the alarm control unit 40 changes the alarm timing t1 for the next times, on the basis of a detection result of the degree of the velocity change of the subject vehicle A (the proximity velocity change value) acquired after determination that the proximity state has occurred.

The driving assistance device 10 corrects the alarm timing t1 for the next times, on the basis of the velocity change of the subject vehicle A since occurrence of the proximity state, i.e., the degree of deceleration of the subject vehicle A after the subject vehicle A has approached the preceding vehicle B. Therefore, the driving assistance device 10 is able to learn the operation of the subject vehicle A with less dependence on the operation of the preceding vehicle B, and appropriately control the alarm timing for the next times based on a timing corresponding to the characteristics of the driver or the characteristics of the subject vehicle A.

Further, if the velocity change of the subject vehicle A (the proximity velocity change value) after determination that the proximity state has occurred is equal to or larger than the change threshold that is set in advance, the alarm control unit 40 accelerates the alarm timing t1 for the next times. Furthermore, if the velocity change of the subject vehicle A after determination that the proximity state has occurred is smaller than the change threshold, the alarm control unit 40 delays the alarm timing t1 for the next times. If the velocity change of the subject vehicle A since the proximity state is large, i.e., if rapid deceleration is performed, the driving assistance device 10 accelerates the alarm timing t1 for the next times and gives the alarm at an earlier timing. In this case, the driving assistance device 10 is able to determine that the rapid deceleration has occurred because the driver decelerates at a timing later than a timing at which the driver needs to decelerate, and urge the driver to decelerate at an earlier timing by issuing the alarm at an earlier timing from next time. Consequently, it is possible to reduce a risk of a collision of the subject vehicle A. In contrast, if the velocity change of the subject vehicle A since the proximity state is small, i.e., if moderate deceleration is performed, the driving assistance device 10 delays the alarm timing t1 for the next times to delay an alarm notice. In this case, the driving assistance device 10 determines that the moderate deceleration is performed because the driver starts to decelerate in plenty of time before the timing at which the driver needs to decelerate, and the driving assistance device 10 delays the alarm notice from next time to prevent issuance of an unnecessary alarm notice to the driver. Consequently, the driver can drive without being disturbed by the unnecessary alarm notice. By controlling the alarm timing t1 for the next times as described above, the driving assistance device 10 is able to appropriately control the warning timing for the next times and more appropriately learn the operation of the subject vehicle A.

Second Embodiment

A driving assistance system 100A according to a second embodiment will be described below. The driving assistance system 100A according to the second embodiment is different from the first embodiment in that a velocity change detection unit 16A detects a plurality of parameters. In the second embodiment, explanation of components having the same configuration as those of the first embodiment will be omitted.

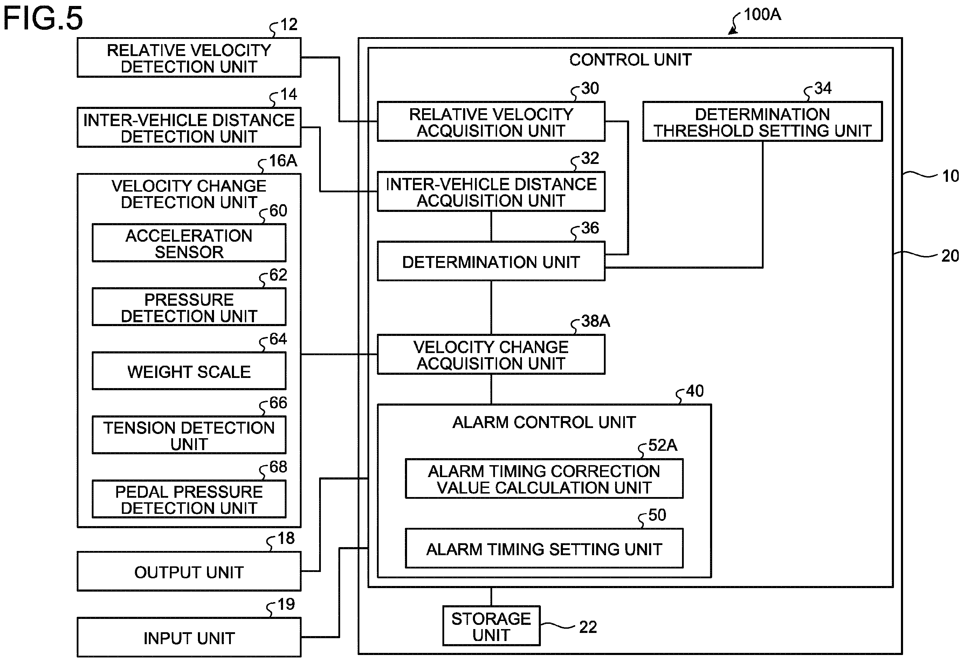

FIG. 5 is a schematic block diagram of the driving assistance system according to the second embodiment. As illustrated in FIG. 5, the velocity change detection unit 16A according to the second embodiment includes an acceleration sensor 60, a pressure detection unit 62, a weight scale 64, a tension detection unit 66, and a pedal pressure detection unit 68. The velocity change detection unit 16A recognizes detection results of the above-described units as the degree of the velocity change of the subject vehicle A mainly due to hard braking, and outputs the detection results to a velocity change acquisition unit 38A.

The acceleration sensor 60 detects acceleration of the subject vehicle A as the value of the velocity change of the subject vehicle A. It may be possible to mount the above-described velocity sensor instead of the acceleration sensor 60, or it may be possible to mount the velocity sensor in addition to the acceleration sensor 60. The pressure detection unit 62 is a pressure sensor that is mounted on a suspension of the subject vehicle A, and detects a change of pressure that acts on the suspension. The pressure detection unit 62 outputs, to the velocity change acquisition unit 38A, a detection result of an amount of change of the pressure as one of the parameters of the degree of the velocity change of the vehicle A. The weight scale 64 is a weight sensor mounted on a seat of the subject vehicle A, and detects a change of weight that acts on the seat of the subject vehicle A. The weight scale 64 outputs, to the velocity change acquisition unit 38A, a detection result of the change of the weight that acts on the seat of the subject vehicle A as one of the parameters of the degree of the velocity change of the subject vehicle A. The tension detection unit 66 is a tension sensor mounted on a seat belt of the subject vehicle A, and detects a change of tension of the seat belt. The tension detection unit 66 outputs, to the velocity change acquisition unit 38A, a detection result of the change of the tension of the seat belt as one of the parameters of the degree of the velocity change of the subject vehicle A. The pedal pressure detection unit 68 is a sensor mounted on the brake of the subject vehicle A, and detects a change of a pedal pressure that acts on the brake. The pedal pressure detection unit 68 outputs, to the velocity change acquisition unit 38A, a detection result of the change of the tension that acts on the brake as one of the parameters of the degree of the velocity change of the subject vehicle A.

The velocity change acquisition unit 38A according to the second embodiment acquires, from the acceleration sensor 60, a value of the velocity change of the subject vehicle A since the proximity timing, and acquires, from the pressure detection unit 62, a value of the change of the pressure of the suspension (an amount of change of the pressure per unit time since the proximity timing). Furthermore, the velocity change acquisition unit 38A acquires, from the weight scale 64, a value of the change of the weight of the seat (an amount of change of the weight per unit time since the proximity timing), acquires, from the tension detection unit 66, a value of the change of the tension of the seat belt (an amount of change of the tension per unit time since the proximity timing), and acquires, from the pedal pressure detection unit 68, a value of the change of the pedal pressure on the brake (an amount of change of the pedal pressure per unit time since the proximity timing). The velocity change acquisition unit 38A calculates (determines) the degree of the velocity change of the subject vehicle A on the basis of the values as described above. For example, the velocity change acquisition unit 38A sets a larger degree of the velocity change of the subject vehicle A with an increase in the values of the pressure change, the weight change, the tension change, and the pedal pressure change since the proximity timing, and sets a smaller degree of the velocity change of the subject vehicle A with a decrease in the values of the pressure change, the weight change, the tension change, and the pedal pressure change since the proximity timing. An alarm timing correction value calculation unit 52A according to the second embodiment acquires the degree of the velocity change of the subject vehicle A set as described above, and calculates the alarm timing correction value $\Delta t$ based on the acquired degree of the velocity change. In this manner, in the second embodiment, the degree of the velocity change of the subject vehicle A is set based also on the pressure change, the weight change, the tension change, and the pedal pressure change, so that it is possible to reflect, in learning of the alarm timing t1, an uncomfortable feeling or a degree of risk that is closer to a direct sense of the driver or a passenger. More specifically, it is possible to detect a state in which the driver or the passenger falls forward due to the hard braking and he/she feels a sense of fear or danger, and reflect the state in timing learning. In the present embodiment, the degree of the velocity change of the subject vehicle A is set by using all of the detection results obtained from the acceleration sensor 60, the pressure detection unit 62, the weight scale 64, the tension detection unit 66, and the pedal pressure detection unit 68, but it may be possible to set the degree of the velocity change of the subject vehicle A by using at least one of the detection results. Namely, the velocity change acquisition unit 38A may acquire at least one of the detection result of the change of the weight of the weight scale 64, the detection result of the change of the tension of the seat belt, and the detection result of the change of the pressure that acts on the suspension, and determine the degree of the velocity change of the subject vehicle A on the basis of at least one the acquired amount of change of the weight, the acquired amount of change of the tension, and the acquired amount of change of the pressure. In other words, the alarm control unit 40 may change the alarm timing t1 on the basis of at least one of the acquired amount of change of the weight, the acquired amount of change of the tension, and the acquired amount of change of the pressure.

In this manner, the velocity change acquisition unit 38A according to the second embodiment acquires the detection result of the change of the weight of the weight scale 64 that is mounted on the seat of the subject vehicle A, and determines the degree of the velocity change of the subject vehicle on the basis of the acquired amount of change of the weight. Therefore, the driving assistance device 10 according to the second embodiment is able to reflect, in learning of the alarm timing t1, an uncomfortable feeling or a degree of risk that is closer to a direct sense of the driver or the passenger.

Furthermore, the velocity change acquisition unit 38A according to the second embodiment acquires the detection result of the change of the tension of the seat belt mounted on the seat of the subject vehicle A, and determines the degree of the velocity change of the subject vehicle on the basis of the acquired amount of change of the tension. Therefore, the driving assistance device 10 according to the second embodiment is able to reflect, in learning of the alarm timing t1, an uncomfortable feeling or a degree of risk that is closer to a direct sense of the driver or the passenger.

Moreover, the velocity change acquisition unit 38A according to the second embodiment acquires the detection result of the change of the pressure that acts on the suspension of the subject vehicle A, and determines the degree of the velocity change of the subject vehicle on the basis of the acquired amount of change of the pressure. Therefore, the driving assistance device 10 according to the second embodiment is able to reflect, in learning of the alarm timing t1, an uncomfortable feeling or a degree of risk that is closer to a direct sense of the driver or the passenger.

Furthermore, for example, similarly to the first embodiment, the alarm timing correction value calculation unit 52A according to the second embodiment may calculate the alarm timing correction value $\Delta t$ on the basis of the detection result obtained from the acceleration sensor 60, i.e., the value of the velocity change of the subject vehicle A, and further correct the alarm timing correction value $\Delta t$ on the basis of the other detection results (the pressure detection unit 62, the weight scale 64, the tension detection unit 66, and the pedal pressure detection unit 68). In this case, the alarm timing correction value calculation unit 52A decreases the alarm timing correction value $\Delta t$ with an increase in the values of the pressure change, the weight change, the tension change, and the pedal pressure change since the proximity timing, and increases the alarm timing correction value $\Delta t$ with a decrease in the values of the pressure change, the weight change, the tension change, and the pedal pressure change since the proximity timing.

Moreover, the velocity change detection unit 16A may include a passenger state detection unit (not illustrated) that detects an emotional state of the passenger. The passenger is a person who rides in the subject vehicle A other than the driver, and is a person who sits in a passenger seat or a backseat of the subject vehicle. The alarm timing correction value calculation unit 52A may calculate the alarm timing correction value $\Delta t$ on the basis of the detection result obtained from the acceleration sensor 60, i.e., the value of the velocity change of the subject vehicle A, and further correct the alarm timing correction value $\Delta t$ on the basis of a detection result of the emotional state of the passenger obtained by the passenger state detection unit. In other words, the alarm control unit 40 changes the alarm timing t1 on the basis of the acquired detection result of the emotional state of the passenger and the acquired velocity change of the subject vehicle A. The passenger state detection unit is able to detect a state in which the passenger feels a sense of fear or danger by detecting the emotional state of the passenger, and the alarm timing correction value calculation unit 52A is able to reflect the state of the passenger in the alarm timing t1, to thereby be able to reflect, in learning of the alarm timing t1, an uncomfortable feeling or a degree of risk that is closer to a direct sense of the passenger. The value of the velocity change of the subject vehicle A may be a value obtained by performing temporal differentiation of the velocity of the subject vehicle A detected by the velocity sensor, similarly to the first embodiment.

For example, the passenger state detection unit may be at least one of a pulse sensor that detects a pulse of the passenger, a voice sensor that detects voice of the passenger, an imaging device that detects facial expression or the number of blinks of the passenger, and a thermometer (for example, a thermal camera) that detects body temperature of the passenger. For example, when the passenger feels that there is a high risk of a collision with the preceding vehicle B, the pulse of the passenger may increase, the voice of the passenger may be changed, the number of blinks of the passenger may increase, or the body temperature of the passenger may increase, all of which (the pulse, the voice, the facial expression, the number of blinks, and the body temperature) reflect the emotional state of the passenger. For example, the velocity change acquisition unit 38A increases the degree of the velocity change of the subject vehicle A with an increase in the pulse of the passenger, and the alarm timing correction value calculation unit 52A accelerates the alarm timing t1 for the next times. Furthermore, when it is detected that the volume of the voice of the passenger increases or a predetermined keyword, such as look out, is included in the voice, the velocity change acquisition unit 38A increases the degree of the velocity change of the subject vehicle A and the alarm timing correction value calculation unit 52A accelerates the alarm timing t1 for the next times. Moreover, when it is detected that the facial expression of the passenger corresponds to a predetermined expression, i.e., facial expression indicating a sense of danger, the velocity change acquisition unit 38A increases the degree of the velocity change of the subject vehicle A and the alarm timing correction value calculation unit 52A accelerates the alarm timing t1 for the next times. Furthermore, the velocity change acquisition unit 38A increases the degree of the velocity change of the subject vehicle A with an increase in the number of blinks of the passenger, and the alarm timing correction value calculation unit 52A accelerates the alarm timing t1 for the next times. Moreover, the velocity change acquisition unit 38A increases the degree of the velocity change of the subject vehicle A with an increase in the body temperature of the passenger, and the alarm timing correction value calculation unit 52A accelerates the alarm timing t1 for the next times.

As described above, the velocity change acquisition unit 38A may acquire the detection result of the emotional state of the passenger and the velocity change of the subject vehicle A, and determine the degree of the velocity change of the subject vehicle A on the basis of the acquired detection result of the emotional state of the passenger and the acquired velocity change of the subject vehicle A. The driver is able to predict behaviors of the vehicle because the driver constantly checks the conditions around the vehicle and operates the accelerator and the brake by him/herself. Therefore, the driver may evaluate the degree of fear subjectively. In the configuration as described above, by changing the warning timing t1 based on the degree of risk or the degree of fear that the passenger has sensed, it is possible to change the warning timing t1 while recognizing the degree of safe driving based on the objective standard that is not recognized by the driver.

Furthermore, the driving assistance system 100A may include an external luminance detection unit (not illustrated). The external luminance detection unit is a luminance sensor that detects a change of luminance in an external environment of the subject vehicle A, i.e., a change of brightness of the external environment. The external luminance detection unit of the present embodiment is, for example, an illuminance sensor, and sequentially detects luminance of the external environment at each of predetermined timings. However, it is sufficient that the external luminance detection unit detects a change of luminance in the external environment of the subject vehicle A, and may detect, for example, a change of a setting value, such as exposure, a shutter speed, or automatic gain control (AGC) in a camera.

The alarm timing correction value calculation unit 52A sequentially acquires a detection result of the luminance of the external environment detected by the external luminance detection unit. If the change of the luminance of the external environment is larger than a predetermined value, the alarm timing correction value calculation unit 52A does not reflect, in a change of the alarm timing t1 from next time, the degree of the velocity change of the subject vehicle determined by the velocity change acquisition unit 38A in a predetermined period from a timing at which the change of the luminance of the external environment exceeds the predetermined value. Namely, the alarm timing correction value calculation unit 52A does not use, in learning of the alarm timing t1, the degree of the velocity change of the subject vehicle when the change of the luminance of the external environment is larger than the predetermined value. The predetermined value described herein is a value that is determined in advance, and can be set arbitrarily. Further, the predetermined time described herein is a value, such as several seconds, that is determined in advance, and can be set arbitrarily.

In this manner, the alarm control unit 40 acquires the detection result of the luminance of the external environment of the subject vehicle A, and when the change of the luminance of the external environment is larger than the predetermined value, the alarm control unit 40 eliminates the detection result of the degree of the velocity change of the subject vehicle A obtained after determination that the proximity state has occurred, from a condition for changing the alarm timing t1 (does not reflect the detection result in the change of the alarm timing t1). With this configuration, the driving assistance system 100A is able to eliminate a case in which the luminance is rapidly changed because of a tunnel or the like from a learning target in learning the alarm timing t1. Just after the vehicle enters a tunnel, eyes are not used to the darkness, and if the vehicle approaches the preceding vehicle B in this state, hard brake operation may be performed for safety purposes. It is dangerous to keep pressing on the accelerator when the eyes receive sunlight or the like, and therefore, in some cases, the velocity change may increase by releasing the accelerator. By eliminating the above-described cases from the learning target, the driving assistance system 100A is able to change the alarm timing t1 in accordance with the degree of safe driving performed by the driver.

Third Embodiment

A third embodiment will be described below. A driving assistance system 100 according to the third embodiment is different from the first embodiment in that an alarm control unit 40A includes a mode selection unit 54A. In the third embodiment, explanation of components having the same configurations as those of the first embodiment will be omitted. The alarm control unit 40A according to the third embodiment may be combined with the second embodiment.

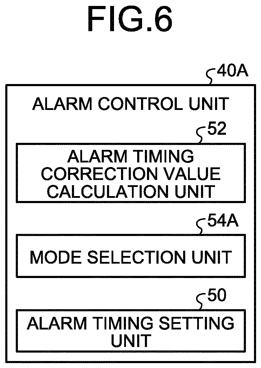

FIG. 6 is a schematic block diagram of the alarm control unit according to the third embodiment. As illustrated in FIG. 6, the alarm control unit 40A according to the third embodiment includes the alarm timing setting unit 50, the alarm timing correction value calculation unit 52, and the mode selection unit 54A. The mode selection unit 54A includes an external environment acquisition unit (not illustrated) that acquires the external environment of the subject vehicle A, and selects a mode that matches the external environment acquired by the external environment acquisition unit for each of external environments. Examples of the mode include a rain mode, a clear-sky mode, and a night mode, and a plurality of modes are set depending on variations of the external environment. The storage unit 22 stores therein the alarm timing correction value $\Delta t$ for each of the modes. The alarm timing correction value calculation unit 52 reads, from the storage unit 22, the calculated alarm timing correction value $\Delta t$ corresponding to the mode selected by the mode selection unit 54A. Then, the alarm timing correction value calculation unit 52 updates the alarm timing correction value $\Delta t$ in the same manner as the first embodiment. However, the alarm timing correction value calculation unit 52 sets the alarm timing correction value $\Delta t$ to a different value for each of the modes. For example, in the night mode, the alarm timing correction value $\Delta t$ is set to a smaller value than normal (daytime). Further, in the rain mode, the alarm timing correction value $\Delta t$ is set to a smaller value than the clear-sky mode. In the present embodiment, the alarm timing correction value $\Delta t$ is updated by learning, so that each of the values is changed. However, learning is performed for each of the modes, so that it is possible to set the appropriate alarm timing t1 in accordance with the external environment.

In this manner, the alarm control unit 40A according to the third embodiment includes the external environment acquisition unit that acquires the external environment of the subject vehicle A, and sets the alarm timing t1 for each of the acquired external environments. Therefore, the driving assistance device 10 according to the third embodiment is able to set the appropriate alarm timing t1 in accordance with the external environment.

In the present embodiment, the alarm timing correction value $\Delta t$ is set to a different value for each of the modes (for each of different external environments), but the alarm timing correction value $\Delta t$ to be stored may be set to a common value regardless of the external environments. In this case, for example, the alarm timing correction value calculation unit 52 reads the alarm timing correction value $\Delta t$ that is the common value, and corrects the alarm timing correction value $\Delta t$ in accordance with the external environment. The alarm timing correction value calculation unit 52 is able to set the appropriate alarm timing t1 in accordance with the external environment by setting a value for correcting the alarm timing correction value $\Delta t$ to a different value for each of different external environments.

While the embodiments of the present invention have been described above, the embodiments are not limited by the contents of the embodiments described above. Further, the components described above include one that can easily be thought of by a person skilled in the art and one that is practically identical. Furthermore, the components described above may be combined appropriately. Moreover, within the scope not departing from the gist of the present invention, various omission, replacement, and modifications of the components may be made.

Reference Signs List

| | |
|---|---|
| 10 | DRIVING ASSISTANCE DEVICE |
| 12 | RELATIVE VELOCITY DETECTION UNIT |
| 14 | INTER-VEHICLE DISTANCE DETECTION UNIT |
| 16 | VELOCITY CHANGE DETECTION UNIT |
| 18 | OUTPUT UNIT |
| 19 | INPUT UNIT |
| 20 | CONTROL UNIT |
| 22 | STORAGE UNIT |
| 30 | RELATIVE VELOCITY ACQUISITION UNIT |
| 32 | INTER-VEHICLE DISTANCE ACQUISITION UNIT |
| 34 | DETERMINATION THRESHOLD SETTING UNIT |
| 36 | DETERMINATION UNIT |
| 38 | VELOCITY CHANGE ACQUISITION UNIT |
| 40 | ALARM CONTROL UNIT |
| 50 | ALARM TIMING SETTING UNIT |
| 52 | ALARM TIMING CORRECTION VALUE CALCULATION UNIT |
| 100 | DRIVING ASSISTANCE SYSTEM |
| A | SUBJECT VEHICLE |
| B | PRECEDING VEHICLE |

t0      PROXIMITY TIMING
t1      ALARM TIMING
Δt      ALARM TIMING CORRECTION VALUE

**Claims**

1. A driving assistance device comprising:

a velocity change acquisition unit configured to acquire a detection result of a degree of a velocity change of a subject vehicle;
a relative velocity acquisition unit configured to acquire a detection result of a relative velocity of the subject vehicle with respect to a preceding vehicle;
an inter-vehicle distance acquisition unit configured to acquire a detection result of an inter-vehicle distance between the subject vehicle and the preceding vehicle;
a determination unit configured to determine whether the subject vehicle is in a proximity state with respect to the preceding vehicle on the basis of the relative velocity and the inter-vehicle distance; and
an alarm control unit configured to set an alarm timing that is a timing at which an alarm is output to a driver of the subject vehicle, on the basis of a timing at which it is determined that the proximity state has occurred, wherein
the alarm control unit changes the alarm timing on the basis of a detection result of the degree of the velocity change of the subject vehicle that is acquired after determination that the proximity state has occurred.

2. The driving assistance device according to claim 1, wherein
the velocity change acquisition unit acquires a detection result of an emotional state of a passenger other than the driver in the subject vehicle and acquires a velocity change of the subject vehicle, and
the alarm control unit changes the alarm timing on the basis of the acquired detection result of the emotional state of the passenger and the acquired velocity change of the subject vehicle.

3. The driving assistance device according to claim 1, wherein
the velocity change acquisition unit acquires at least one of a detection result of a change of weight indicated by a weight scale that is mounted on a seat of the subject vehicle, a detection result of a change of tension of a seat belt mounted on the seat of the subject vehicle, and a detection result of a change of pressure that acts on a suspension of the subject vehicle, and
the alarm control unit changes the alarm timing on the basis of at least one of an amount of the acquired change of weight, an amount of the acquired change of tension, and an amount of the acquired change of pressure.

4. The driving assistance device according to any one of claims 1 to 3, wherein the alarm control unit acquires a detection result of luminance of an external environment of the subject vehicle, and if a change of the luminance of the external environment in a predetermined period is larger than a predetermined value, the alarm control unit eliminates, from a condition for changing the alarm timing, a detection result of the degree of the velocity change of the subject vehicle that is acquired after determination that the proximity state has occurred.

5. The driving assistance device according to any one of claims 1 to 4, wherein the alarm control unit includes a driver information acquisition unit for identifying the driver, sets the alarm timing for each of identified drivers, and resets the alarm timing to an initial set value when the driver information acquisition unit determines that the driver has not driven the subject vehicle for a predetermined period or longer.

6. The driving assistance device according to any one of claims 1 to 5, wherein the alarm control unit includes an external environment acquisition unit that acquires an external environment of the subject vehicle, and sets the alarm timing for each of acquired external environments.

7. The driving assistance device according to any one of claims 1 to 6, wherein the alarm control unit resets changes of the alarm timing made on preceding days, and resets the alarm timing at start of driving the subject vehicle on a current day to an initial set value.

8. An on-vehicle recording device comprising the driving assistance device according to any one of claims 1 to 7.

9. A driving assistance system comprising:

the driving assistance device according to any one of claims 1 to 7; and

a detection unit configured to detect the velocity change of the subject vehicle, the relative velocity of the subject vehicle with respect to the preceding vehicle, and the inter-vehicle distance between the subject vehicle and the preceding vehicle.

**10.** A driving assistance method comprising:

a velocity change acquisition step of acquiring a detection result of a degree of a velocity change of a subject vehicle;

a relative velocity acquisition step of acquiring a detection result of a relative velocity of the subject vehicle with respect to a preceding vehicle;

an inter-vehicle distance acquisition step of acquiring a detection result of an inter-vehicle distance between the subject vehicle and the preceding vehicle;

a determination step of determining whether the subject vehicle is in a proximity state with respect to the preceding vehicle on the basis of the relative velocity and the inter-vehicle distance; and

an alarm control step of setting an alarm timing that is a timing at which an alarm is output to a driver of the subject vehicle, on the basis of a timing at which it is determined that the proximity state has occurred, wherein at the alarm control step, the alarm timing is changed on the basis of a value of the velocity change of the subject vehicle that is acquired after determination that the proximity state has occurred.

**11.** A program that causes a computer to execute:

a velocity change acquisition step of acquiring a detection result of a degree of a velocity change of a subject vehicle;

a relative velocity acquisition step of acquiring a detection result of a relative velocity of the subject vehicle with respect to a preceding vehicle;

an inter-vehicle distance acquisition step of acquiring a detection result of an inter-vehicle distance between the subject vehicle and the preceding vehicle;

a determination step of determining whether the subject vehicle is in a proximity state with respect to the preceding vehicle on the basis of the relative velocity and the inter-vehicle distance; and

an alarm control step of setting an alarm timing that is a timing at which an alarm is output to a driver of the subject vehicle, on the basis of a timing at which it is determined that the proximity state has occurred, wherein at the alarm control step, the alarm timing is changed on the basis of a value of the velocity change of the subject vehicle that is acquired after determination that the proximity state has occurred.

# FIG.1

# FIG.2

RELATIVE VELOCITY DETECTION UNIT ⌐12

INTER-VEHICLE DISTANCE DETECTION UNIT ⌐14

VELOCITY CHANGE DETECTION UNIT ⌐16

OUTPUT UNIT ⌐18

INPUT UNIT ⌐19

⌐100 A

CONTROL UNIT

RELATIVE VELOCITY ACQUISITION UNIT ⌐30

DETERMINATION THRESHOLD SETTING UNIT ⌐34

INTER-VEHICLE DISTANCE ACQUISITION UNIT ⌐32

DETERMINATION UNIT ⌐36

VELOCITY CHANGE ACQUISITION UNIT ⌐38

ALARM CONTROL UNIT ⌐40

ALARM TIMING CORRECTION VALUE CALCULATION UNIT ⌐52

ALARM TIMING SETTING UNIT ⌐50

STORAGE UNIT 22

10

20

EP 3 570 263 A1

17

# FIG.3

START

S10

ACQUIRE DETERMINATION THRESHOLD

S12

ACQUIRE DETECTION RESULTS OF RELATIVE VELOCITY AND INTER-VEHICLE DISTANCE

S14

NO ← PROXIMITY STATE?

↓YES

S16

SET ALARM TIMING BASED ON PROXIMITY TIMING AND ALARM TIMING CORRECTION VALUE

S18

OUTPUT ALARM AT ALARM TIMING

END

# FIG.4

START

S20

DETERMINE THAT PROXIMITY STATE HAS OCCURRED

S22

ACQUIRE DETECTION RESULT OF VELOCITY CHANGE OF SUBJECT VEHICLE SINCE PROXIMITY TIMING

S24

CALCULATE AND UPDATE ALARM TIMING CORRECTION VALUE FOR NEXT TIMES

END

# FIG.5

RELATIVE VELOCITY DETECTION UNIT ⌇12

INTER-VEHICLE DISTANCE DETECTION UNIT ⌇14

VELOCITY CHANGE DETECTION UNIT ⌇16A
- ACCELERATION SENSOR ⌇60
- PRESSURE DETECTION UNIT ⌇62
- WEIGHT SCALE ⌇64
- TENSION DETECTION UNIT ⌇66
- PEDAL PRESSURE DETECTION UNIT ⌇68

OUTPUT UNIT ⌇18

INPUT UNIT ⌇19

CONTROL UNIT ⌇100A

RELATIVE VELOCITY ACQUISITION UNIT ⌇30

DETERMINATION THRESHOLD SETTING UNIT ⌇34

INTER-VEHICLE DISTANCE ACQUISITION UNIT ⌇32

DETERMINATION UNIT ⌇36

VELOCITY CHANGE ACQUISITION UNIT ⌇38A

ALARM CONTROL UNIT ⌇40
- ALARM TIMING CORRECTION VALUE CALCULATION UNIT ⌇52A
- ALARM TIMING SETTING UNIT ⌇50

STORAGE UNIT ⌇22

10
20

EP 3 570 263 A1

# FIG.6

~40A

```
┌─────────────────────────────────┐
│  ALARM CONTROL UNIT             │
│                           ~52   │
│  ┌───────────────────────────┐  │
│  │     ALARM TIMING          │  │
│  │  CORRECTION VALUE         │  │
│  │  CALCULATION UNIT         │  │
│  └───────────────────────────┘  │
│                           ~54A  │
│  ┌───────────────────────────┐  │
│  │  MODE SELECTION UNIT      │  │
│  └───────────────────────────┘  │
│                           ~50   │
│  ┌───────────────────────────┐  │
│  │  ALARM TIMING SETTING     │  │
│  │         UNIT              │  │
│  └───────────────────────────┘  │
└─────────────────────────────────┘
```

<table>
<tr><td colspan="2"><b>INTERNATIONAL SEARCH REPORT</b></td><td>International application No.<br>PCT/JP2018/021419</td></tr>
</table>

**A. CLASSIFICATION OF SUBJECT MATTER**
Int.Cl. G08G1/16(2006.01)i

According to International Patent Classification (IPC) or to both national classification and IPC

**B. FIELDS SEARCHED**

Minimum documentation searched (classification system followed by classification symbols)
Int.Cl. G08G1/16

Documentation searched other than minimum documentation to the extent that such documents are included in the fields searched
        Published examined utility model applications of Japan        1922-1996
        Published unexamined utility model applications of Japan      1971-2018
        Registered utility model specifications of Japan              1996-2018
        Published registered utility model applications of Japan      1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2014-117995 A (DAIHATSU MOTOR CO., LTD.) 30 June 2014, paragraphs [0015]-[0022], fig. 2-4 (Family: none) | 1, 8-11<br>2, 6<br>3-5, 7 |
| Y<br>A | JP 2002-220035 A (TOYOTA MOTOR CORPORATION) 06 August 2002, paragraphs [0003], [0016] & US 2002/0101337 A1, paragraphs [0047]-[0050], [0019] & EP 1209649 A2 | 2, 6<br>1, 3-5, 7-11 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    08.08.2018 | Date of mailing of the international search report<br>    21.08.2018 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

**INTERNATIONAL SEARCH REPORT**

International application No.

PCT/JP2018/021419

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2002-67845 A (TOYOTA MOTOR CORPORATION) 08 March 2002, entire text, all drawings & US 2002/0044047 A1 & DE 10141920 A1 | 1-11 |
| A | JP 2010-143578 A (DENSO CORPORATION) 01 July 2010, entire text, all drawings & US 2007/0021876 A1 & EP 1721800 A2 | 1-11 |
| E, X | JP 2018-92554 A (SYSTEM TOKYO CO., LTD.) 14 June 2018, paragraphs [0039]-[0049] (Family: none) | 1-2, 6, 8-11 |

Form PCT/ISA/210 (continuation of second sheet) (January 2015)

**EP 3 570 263 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011253487 A
- JP 2013222297 A
- JP 2012003710 A